# EUROPEAN PATENT APPLICATION

(11) **EP 4 734 230 A1**
(43) Date of publication of application: **29.04.2026**
(21) Application number: 25210279.3
(22) Date of filing: 22.10.2025
(51) Int. Cl.: H01M 10/613, H01M 10/6551, H01M 10/6556, H01M 10/6569, H01M 50/15, H01M 10/647, H01M 10/6553, H01M 50/55

(54) **SECONDARY BATTERY AND BATTERY PACK INCLUDING THE SAME**

(30) Priority: 28.10.2024 KR 20240148727
(71) Applicant: SAMSUNG SDI CO., LTD., Yongin-si, Gyeonggi-do 17084 (KR)
(72) Inventor: KIM, Jun Seok, 16678 Suwon-si, Gyeonggi-do (KR)
(74) Representative: Gulde & Partner

(57) **Abstract**

A secondary battery (1), including a case (100), an electrode assembly (200) accommodated in the case (100), a cap assembly (300) facing the electrode assembly (200), and a cooling unit (400) in the cap assembly (300), the cooling unit (400) including a refrigerant.

## Description

### BACKGROUND

### 1. Field

The present disclosure relates to a secondary battery and a battery pack including the same.

### 2. Description of the Related Art

Generally, recently, the demand for secondary batteries with high energy density and high capacity is rapidly increasing with the rapid supply of electronic devices using batteries, such as mobile phones, notebook computers, electric vehicles, and the like. Accordingly, research and development for improving the performance of lithium secondary batteries is being actively conducted.

A lithium secondary battery is a battery including a positive electrode and a negative electrode including active materials capable of intercalating and deintercalating lithium ions, and an electrolyte, and produces electrical energy due to oxidation and reduction reactions when lithium ions are intercalated/deintercalated into/from the positive electrode and the negative electrode.

The above-described information disclosed in the technology that forms the background of the present disclosure is provided to improve understanding of the background of the present disclosure, and thus may include information that does not constitute the related art.

### SUMMARY

The invention is defined by the appended claims. The description that follows is subjected to this limitation. Any disclosure lying outside the scope of said claims is only intended for illustrative as well as comparative purposes.

Embodiments include a secondary battery, including a case, an electrode assembly accommodated in the case, a cap assembly facing the electrode assembly, and a cooling unit in the cap assembly, the cooling unit including a refrigerant.

According to one embodiment, the cooling unit may be configured to absorb heat from the electrode assembly and/or the cap assembly and to release absorbed heat into a surrounding environment of the secondary battery (e. g. to operate or to cool the electrode assembly and/or the cap assembly). In other words, the cooling unit may be a thermal management system configured to transfer heat from a source (e. g. the electrode assembly and/or the cap assembly) to a sink (e. g. the surrounding environment of the secondary battery), usually the ambient air or a coolant, thereby reducing the temperature of the source. In other words, the cooling unit may be a thermal management device that consists of two functional sides, namely a heat-absorbing side, where heat is taken in from the electrode assembly and/or the cap assembly that needs to be cooled, and a heat-releasing side, where the absorbed heat is transferred to the surrounding environment or a designated heat sink.

According to another embodiment, the cooling unit may be configured to operate (e. g. to cool the electrode assembly and/or the cap assembly) based on a phase change of the refrigerant. It may absorb heat on an evaporator side (e. g. the heat-absorbing side), where the refrigerant changes from liquid to vapor, and may release heat on a condenser side (e. g. the heat-releasing side), where the refrigerant condenses back from vapor to liquid.

According to another embodiment, the cooling unit may be configured to operate (e. g. to cool the electrode assembly and/or the cap assembly) based on a flow or movement of the refrigerant whose phase has changed between the electrode assembly and/or the cap assembly and the surrounding environment of the secondary battery.

According to another embodiment, the cooling unit may include a cavity or a hollow space in which the refrigerant may be accommodated and/or through which the refrigerant can flow.

According to another embodiment, the cooling unit is integrated into the cap assembly. An integrated component is a part that is built into or embedded within another component, forming a unified functional unit. Instead of existing as a separate, standalone element, the integrated component operates as an internal part of the host system, often improving performance, reducing space requirements, or simplifying assembly.

According to another embodiment, the cap assembly may include a cap plate coupled to the case, the cap plate facing the electrode assembly along a direction parallel to a first direction, an electrode terminal coupled to the cap plate, the electrode terminal being in contact with the cooling unit, and a connection member connected to the electrode terminal and the electrode assembly. Additionally, the connection member may be in contact with the cooling unit. In other words, the cooling unit may be a thermal management system configured to transfer heat from the electrode terminal contacting the cooling unit and/or from the connection member connected to the electrode terminal and to the electrode assembly. The heat-absorbing side may be configured to take heat in (e. g. absorb heat) from the electrode terminal and/or the connection member.

According to another embodiment, the first direction may extend from a bottom of the case to a top of the case (e. g. towards the cap assembly).

According to another embodiment, the cooling unit may further include a first portion, a second portion spaced apart from the first portion along a direction parallel to a second direction intersecting the first direction, and a third portion between the first portion and the second portion, the third portion being thinner than either of the first portion and the second portion.

According to another embodiment, the second direction and a third direction may both be orthogonal to the first direction and to each other.

According to another embodiment, a thickness of the cooling unit parallel to the first direction becomes thinner from the first portion to the third portion and from the second portion to the third portion. In other words, the thickness of the cooling unit parallel to the first direction may decrease from the first portion to the third portion and from the second portion to the third portion. The decrease may be linear or continuous.

According to another embodiment, the cooling unit may further include a heat absorption unit facing a first surface of the cap plate, the heat absorption unit contacting (e. g. directly contacting) the connection member, and a heat dissipation unit facing a second surface of the cap plate, the heat dissipation unit facing a direction opposite the first surface. The first surface may face the electrode assembly. The second surface may face away from the electrode assembly. The heat absorption unit may contact the cap plate. The heat dissipation unit may contact the cap plate.

According to another embodiment, the heat absorption unit and/or the heat dissipation unit may include a cavity or a hollow space in which the refrigerant may be accommodated and/or through which the refrigerant can flow.

According to another embodiment, the heat absorption unit and the heat dissipation unit may be spaced apart along a direction parallel to the first direction.

According to another embodiment, the cap plate may be disposed between the heat absorption unit and the heat dissipation unit.

According to another embodiment, the heat absorption unit may be between (e. g. disposed between) the cap plate and the electrode assembly.

According to another embodiment, a thickness of the heat absorption unit parallel to the first direction may vary along a direction parallel to the second direction.

According to another embodiment, the heat absorption unit may further include a first portion, a second portion spaced apart from the first portion along a direction parallel to a second direction intersecting the first direction, and a third portion between the first portion and the second portion, the third portion being thinner than either of the first portion and the second portion.

According to another embodiment, the thickness of the heat absorption unit may decrease from the first portion of the heat absorption unit to the third portion of the heat absorption unit and from the second portion of the heat absorption unit to the third portion of the heat absorption unit. The decrease may be linear or continuous.

According to another embodiment, the heat absorption unit may include a first refrigerant induction surface. The first refrigerant induction surface may be referred to as one surface of the heat absorption unit facing a direction in which the electrode assembly is located (i.e., the heat absorption unit facing the electrode assembly).

According to another embodiment, a first refrigerant induction surface may be inclined (e.g., angled at an oblique angle with respect to the bottom of the cap plate) to induce movement (e. g. a flow) of the refrigerant to the first portion and the second portion, the first refrigerant induction surface being in the heat absorption unit. In other words, the heat absorption unit may include a first refrigerant induction surface, which may face the electrode assembly and/or is inclined, e. g. inclined to a direction parallel to the second direction.

According to another embodiment, a pair of first refrigerant induction surfaces may be symmetrically disposed. The pair of first refrigerant induction surfaces may be formed to be inclined from the third portion of the heat absorption unit toward the first portion and the second portion of the heat absorption unit.

According to another embodiment, a thickness of the heat dissipation unit parallel to the first direction may vary along a direction parallel to the second direction.

According to another embodiment, the heat dissipation unit may further include a first portion, a second portion spaced apart from the first portion along a direction parallel to a second direction intersecting the first direction, and a third portion between the first portion and the second portion, the third portion being thinner than either of the first portion and the second portion.

According to another embodiment, the thickness of the heat dissipation unit may decrease from the first portion of the heat dissipation unit to the third portion of the heat dissipation unit and from the second portion of the heat dissipation unit to the third portion of the heat dissipation unit. The decrease may be linear or continuous.

According to another embodiment, the heat dissipation unit may include a second refrigerant induction surface. The second refrigerant induction surface may be referred to as one surface of the heat dissipation unit facing a direction opposite the direction in which the cap plate is located.

According to another embodiment, a second refrigerant induction surface may be inclined to induce movement of the refrigerant to the third portion, the second refrigerant induction surface being in the heat dissipation unit. In other words, the heat dissipation unit may include a second refrigerant induction surface, which may face away from the cap assembly and/or is inclined, e. g. inclined to a direction parallel to the second direction.

According to another embodiment, a pair of second refrigerant induction surfaces may be symmetrically disposed. The pair of second refrigerant induction surfaces may be formed to be inclined from the third portion of the heat dissipation unit toward the first portion and the second portion of the heat dissipation unit.

According to another embodiment, the heat dissipation unit may include a plurality of surface-enhancing elements configured to increase an effective surface area of the heat dissipation unit available for heat transfer from the refrigerant (e. g. to a surrounding environment).

According to another embodiment, the heat dissipation unit may include a plurality of through hole portions. The through hole portions may be configured to increase a surface area of the heat dissipation unit such that heat of the heat dissipation unit may be quickly dissipated. In other words, the through hole portions may be surface-enhancing elements, which are structural components configured to increase an effective surface area available for heat transfer to a surrounding environment. By expanding the contact area between the heat dissipation unit and for example ambient air (or another cooling medium), these elements improve the efficiency of heat dissipation.

According to another embodiment, the plurality of through hole portions may extend through the heat dissipation unit in a direction parallel to the first direction, the plurality of through hole portions having different sizes. A cross-sectional shape of the through hole portions may be designed to have various shapes such as an oval shape, a polygonal shape, and the like. The plurality of through hole portions may be formed to have different diameters.

According to another embodiment, the diameters of the plurality of through hole portions may become smaller from the first portion of the heat dissipation unit to the third portion of the heat dissipation unit. Further, the diameters of the plurality of through hole portions may become smaller from the second portion of the heat dissipation unit to the third portion of the heat dissipation unit.

According to another embodiment, the heat dissipation unit may be formed with a porous structure.

According to another embodiment, the electrode terminal may protrude from the cap plate along the first direction.

According to another embodiment, the heat dissipation unit parallel to the first direction may be thinner than the electrode terminal parallel to the first direction. In other words, the electrode terminal or a part thereof as well as the electrode terminal or a part thereof may extend in a direction parallel to the first direction, wherein the electrode terminal or the part thereof may be thinner than the electrode terminal or the part thereof.

According to another embodiment, the cooling unit may further include a refrigerant moving portion connecting the heat absorption unit and the heat dissipation unit to allow movement of the refrigerant. In other words, refrigerant moving portion may connect the heat absorption unit and the heat dissipation unit fluid conductive with each other.

According to another embodiment, the refrigerant moving portion may include a cavity or a hollow space in which the refrigerant may be accommodated and/or through which the refrigerant can flow from the heat absorption unit to the heat dissipation unit.

According to another embodiment, the refrigerant moving portion may pass (e. g. extend) through the cap plate in a direction parallel to the first direction.

According to another embodiment, the refrigerant moving portion may include a first refrigerant moving portion, a second refrigerant moving portion spaced apart from the first refrigerant moving portion along a direction parallel to the second direction, and a third refrigerant moving portion between the first refrigerant moving portion and the second refrigerant moving portion.

According to another embodiment, the refrigerant vaporized in the heat absorption unit may move to the heat dissipation unit through the first refrigerant moving portion and the second refrigerant moving portion, and the refrigerant liquefied in the heat dissipation unit may move to the heat absorption unit through the third refrigerant moving portion. In other words, the refrigerant moving portion may be configured such that when the refrigerant is vaporized in the heat absorption unit the refrigerant is caused to move to the heat dissipation unit through the first refrigerant moving portion and the second refrigerant moving portion, and when the refrigerant is liquefied in the heat dissipation unit the refrigerant is caused to move to the heat absorption unit through the third refrigerant moving portion. For example, the first refrigerant moving portion and the second refrigerant moving portion may be configured such that in a circumstance where the refrigerant is vaporized in the heat absorption unit the refrigerant is caused to move to the heat dissipation unit through the first refrigerant moving portion and the second refrigerant moving portion, and the third refrigerant moving portion may be configured such that in a circumstance where the refrigerant is liquefied in the heat dissipation unit the refrigerant is caused to move to the heat absorption unit through the third refrigerant moving portion.

Embodiments include a battery pack, including a housing, and one or more secondary batteries in the housing, wherein each of the one or more secondary batteries includes a case, an electrode assembly accommodated in the case, a cap assembly facing the electrode assembly, and a cooling unit in the cap assembly, the cooling unit accommodating a refrigerant.

### BRIEF DESCRIPTION OF THE DRAWINGS

Features will become apparent to those of ordinary skill in the art by describing in detail exemplary embodiments with reference to the attached drawings, in which:
FIG. 1 is a perspective view schematically illustrating a configuration of a battery pack according to an embodiment of the present disclosure;
FIG. 2 is a perspective view schematically illustrating a configuration of a secondary battery according to an embodiment of the present disclosure;
FIG. 3 is a cross-sectional view schematically illustrating the configuration of the secondary battery according to an embodiment of the present disclosure;
FIG. 4 is a cross-sectional view schematically illustrating a configuration of a cap assembly according to an embodiment of the present disclosure;
FIG. 5 is a plan view schematically illustrating the configuration of the cap assembly according to an embodiment of the present disclosure;
FIG. 6 is a cross-sectional view schematically illustrating a configuration of a cooling unit installed in the cap assembly according to an embodiment of the present disclosure;
FIG. 7 is a plan view schematically illustrating the configuration of the cooling unit installed in the cap assembly according to an embodiment of the present disclosure; and
FIG. 8 is a cross-sectional view schematically illustrating a movement path of a refrigerant in the cooling unit according to an embodiment of the present disclosure.

### DETAILED DESCRIPTION

Example embodiments will now be described more fully hereinafter with reference to the accompanying drawings; however, they may be embodied in different forms and should not be construed as limited to an embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

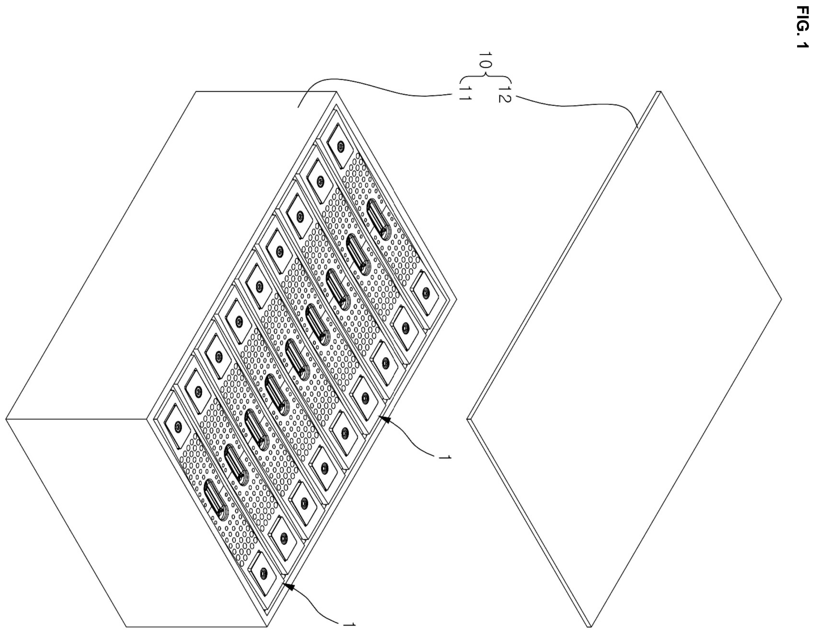

FIG. 1 is a perspective view schematically illustrating a configuration of a battery pack according to an embodiment of the present disclosure.

Referring to FIG. 1, the battery pack according to an embodiment of the present disclosure may include a housing 10 and a secondary battery 1.

The housing 10 may support the secondary battery 1 and protect the secondary battery 1 from an external impact and foreign substances. The housing 10 may provide a space which accommodates the secondary battery 1 therein.

The housing 10 may include a housing body 11 and a housing cover 12.

The housing body 11 may be formed to have a shape of a box with an empty interior and one open side. For example, the open side of the housing body 11 may be disposed to face upward based on FIG. 1.

A cross-sectional shape of the housing body 11 may be designed to have various shapes other than the quadrangular shape shown, such as a polygonal shape, a circular shape, an oval shape, and the like.

The housing cover 12 may be coupled to the housing body 11 and close an inner space of the housing body 11. For example, the housing cover 12 may be formed to have a substantially plate shape. The housing cover 12 may be disposed to face an upper side surface of the housing body 11 (in the orientation shown in FIG. 1).

The housing cover 12 may be fixed to an upper end portion of the housing body 11 by various types of coupling methods such as bolting, welding, fitting, and the like.

The secondary battery 1 may function as a unit structure which stores power in and supplies power to the battery pack. The secondary battery 1 may be disposed in the housing 10.

A plurality of secondary batteries 1 may be provided. The plurality of secondary batteries 1 may be arranged in a plurality of rows in the housing 10. The plurality of secondary batteries 1 may be connected in series or parallel by an electrical connection unit such as a bus bar or the like.

Hereinafter, an example in which the secondary battery 1 is a prismatic battery as a lithium-ion secondary battery will be described. However, the secondary battery 1 may be a lithium polymer battery or cylindrical battery.

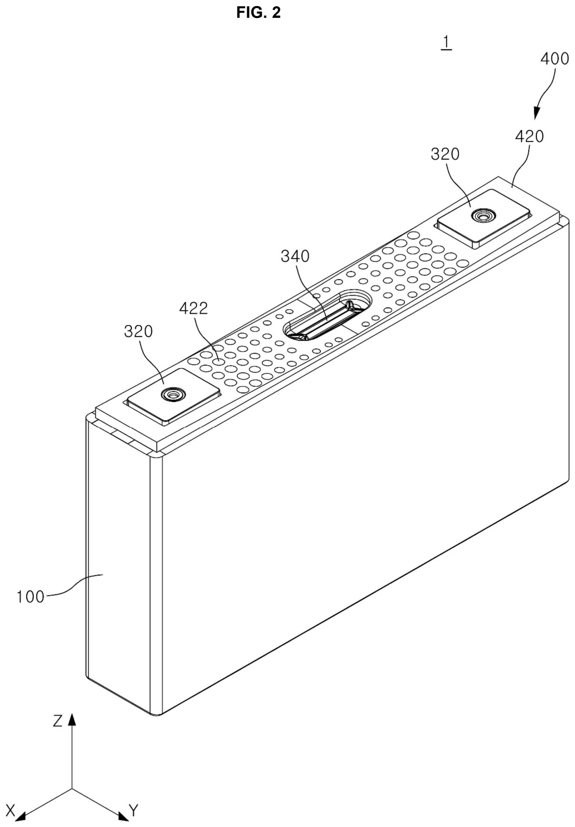

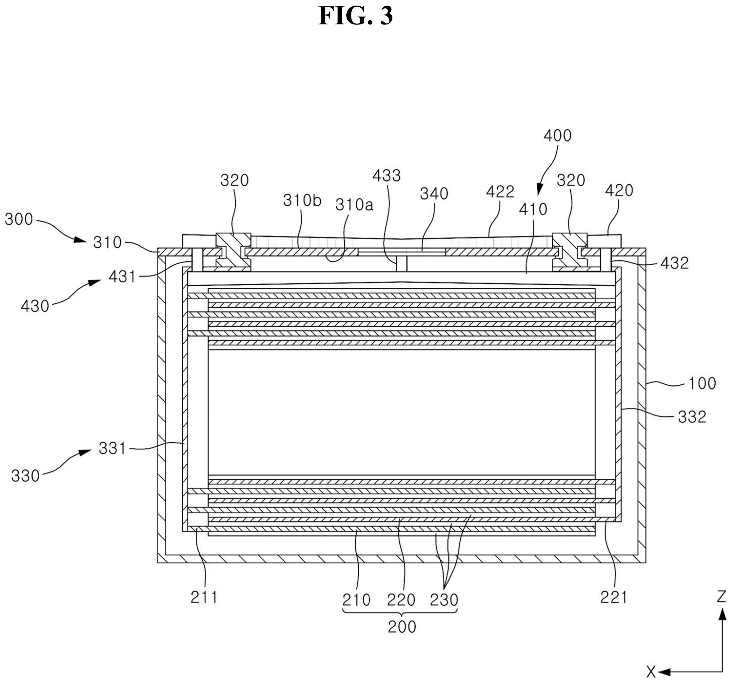

FIG. 2 is a perspective view schematically illustrating a configuration of the secondary battery according to an embodiment of the present disclosure, and FIG. 3 is a cross-sectional view schematically illustrating the configuration of the secondary battery of FIG. 2.

A first direction to be described below may mean a Z-axis direction based on FIGS. 2 and 3, a second direction may mean an X-axis direction based on FIGS. 2 and 3, and a third direction may mean a Y-axis direction based on FIG. 2.

The first direction may extend from a bottom of the housing body 11 to the open side of the housing body 11 (e. g. to the upper end portion of the housing body 11). The second direction and the third direction may both be orthogonal to the first direction and to each other.

Referring to FIGS. 1 to 3, the secondary battery 1 according to an embodiment of the present disclosure may include at least one electrode assembly 200 wound with a separator 230, which is an insulator, interposed between a positive electrode 210 and a negative electrode 220, a case 100 in which the electrode assembly 200 is accommodated, a cap assembly 300 disposed to face the electrode assembly 200, and a cooling unit 400 (e.g., a cooler) which is installed in the cap assembly 300 and accommodates a refrigerant.

The positive electrode 210 and the negative electrode 220 of the electrode assembly 200 may include a coated portion which is a region where an active material is applied on a current collector formed of a thin metal foil, and uncoated portions 211 and 221 which are regions where the active material is not coated.

The positive electrode 210 and the negative electrode 220 of the electrode assembly 200 may be wound with the separator 230, which is an insulator, interposed therebetween. However, the electrode assembly 200 may also be formed in a structure in which the positive electrodes 210 and the negative electrodes 220 formed of a plurality of sheets are alternately stacked with the separator 230 therebetween.

The case 100 may form an overall exterior of the secondary battery 1, and may be formed of a conductive metal such as aluminum, an aluminum alloy, or nickel-plated steel. Further, the case 100 may provide a space where the electrode assembly 200 is accommodated.

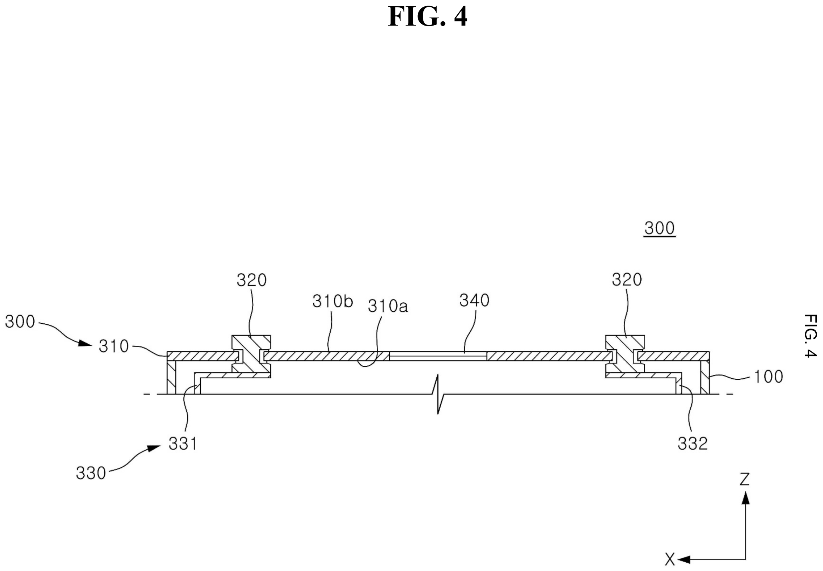

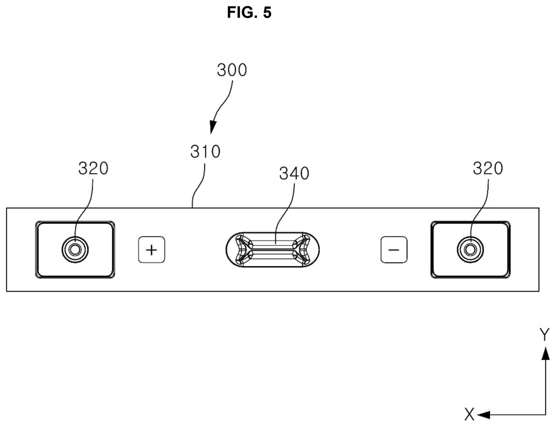

FIG. 4 is a cross-sectional view schematically illustrating a configuration of the cap assembly according to an embodiment of the present disclosure, and FIG. 5 is a plan view schematically illustrating the configuration of the cap assembly according to an embodiment of the present disclosure.

Referring to FIGS. 1 to 5, the cap assembly 300 according to an embodiment may include a cap plate 310 which is coupled to the case 100 and covers an opening provided in the case 100. The cap plate 310 may be formed of a conductive material.

The cap plate 310 may be formed of a thin plate and may be coupled to the opening of the case 100. The cap plate 310 may be fixed to the case 100 by various types of coupling methods such as bolting, welding, fitting, and the like.

The cap plate 310 may be disposed to face the electrode assembly 200 along a direction parallel to the first direction (i.e., in a direction parallel to the Z-axis direction). The cap plate 310 may be disposed to be spaced apart from the electrode assembly 200 along the first direction.

An electrode terminal 320 electrically connected to the positive electrode 210 or negative electrode 220 of the electrode assembly 200 (e. g. two electrode terminals 320, one of which is electrically connected to the positive electrode 210 and one of which is electrically connected to the negative electrode 220) may be installed to protrude outward through the cap plate 310 (away from the respective electrically connected electrode). The electrode terminal 320 may protrude from the cap plate 310 along the first direction. The electrode terminal 320 may be in contact with the cooling unit 400 to be described below.

An outer perimetric surface of an upper pillar of the electrode terminal 320 protruding from the cap plate 310 may be threaded, and may be fixed to the cap plate 310 with a nut. However, the electrode terminal 320 may be formed in a rivet structure, and may be riveted or welded to the cap plate 310.

A pair of electrode terminals 320 may be provided. The pair of electrode terminals 320 may be symmetrically disposed at both sides of the cap plate 310. The pair of electrode terminals 320 may be disposed to be spaced apart from each other along a direction parallel to the second direction. The pair of electrode terminals 320 may have different polarities.

The connection member 330 may be connected to the electrode terminal 320 and the electrode assembly 200. The electrode terminal 320 may be electrically connected to the connection member 330 including first and second current collectors 331 and 332 (hereinafter, referred to as positive and negative electrode current collectors, respectively) joined to a positive electrode uncoated portion 211 or a negative electrode uncoated portion 221 by welding.

For example, the electrode terminal 320 may be joined to the positive and negative electrode current collectors 331 and 332 by welding. However, the electrode terminal 320 and the positive and negative electrode current collectors 331 and 332 may be formed to be integrally joined.

A vent 340 formed with a notch may be installed in the cap plate 310 according to an embodiment. The vent 340 may be disposed between the pair of electrode terminals 320.

The vent 340, closed under normal operation, may be opened in response to a change in internal pressure of the case 100. That is, the vent 340 may maintain a closed state to seal the case 100 during normal operation of the electrode assembly 200.

The vent 340 may be opened as the internal pressure of the case 100 rises above a set (e.g., predetermined) value due to overcharging, the occurrence of fire, or the like, and may discharge emissions such as flames, gas, or the like from the inside of the case 100 to the outside of the case 100.

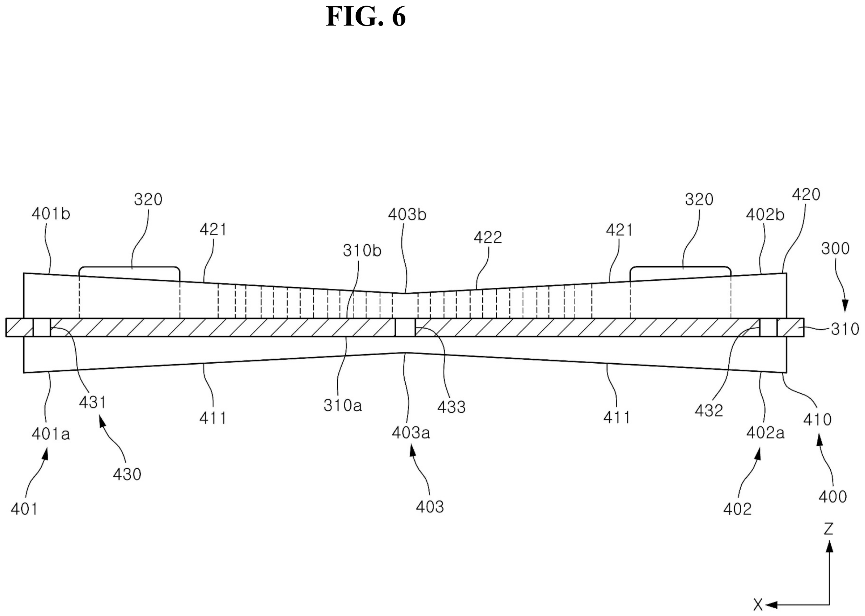

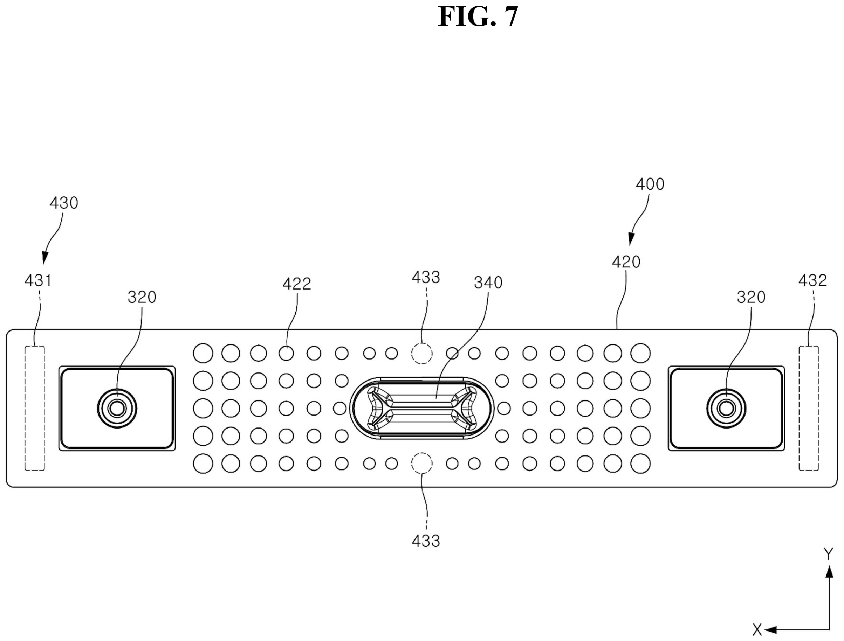

FIG. 6 is a cross-sectional view schematically illustrating a configuration of the cooling unit installed in the cap assembly according to an embodiment of the present disclosure, and FIG. 7 is a plan view schematically illustrating the configuration of the cooling unit installed in the cap assembly according to an embodiment of the present disclosure.

Referring to FIGS. 1 to 7, the cooling unit 400 may be installed in the cap assembly 300. The cooling unit 400 may be formed to have a shape of a box with an empty interior. The cooling unit 400 may include a thermally conductive material.

The cooling unit 400 may cool the cap assembly 300. The refrigerant may be accommodated in the cooling unit 400. The refrigerant may include a liquid refrigerant having a boiling point of 60°C to 100°C which is higher than an operating temperature of the secondary battery 1. For example, the refrigerant may include methanol, ethanol, water, or the like.

The cooling unit 400 may include a first portion 401, a second portion 402 disposed to be spaced apart from the first portion 401 along a direction parallel to the second direction, and a third portion 403 disposed between the first portion 401 and the second portion 402 and having a thickness that is thinner than thicknesses of (e.g., either of) the first portion 401 and the second portion 402.

The first portion 401 and the second portion 402 may be adjacent to the electrode terminals 320, and the third portion 403 may be adjacent to the vent 340.

A thickness of the cooling unit 400 parallel to the first direction may become thinner (e. g. decrease, decreases continuously or linearly) from the first portion 401 to the third portion 403. Further, the thickness of the cooling unit 400 parallel to the first direction may become thinner (e. g. decrease, decreases continuously or linearly) from the second portion 402 to the third portion 403.

The cooling unit 400 may include a heat absorption unit 410, a heat dissipation unit 420, and a refrigerant moving portion 430.

The heat absorption unit 410 may be disposed to face the cap plate 310 along a direction parallel to the first direction. The heat absorption unit 410 may be formed to have a substantially plate shape.

The heat absorption unit 410 may be formed in a hollow shape provided with an inner space. The refrigerant may be accommodated in the heat absorption unit 410. The refrigerant may move in the heat absorption unit 410.

The heat absorption unit 410 may be disposed to face a first surface 310a (see FIG. 3) of the cap plate 310. The heat absorption unit 410 may cover the first surface 310a of the cap plate 310. The heat absorption unit 410 may contact the first surface 310a of the cap plate 310.

The first surface 310a of the cap plate 310 may be referred to as an inner side surface of the cap plate 310 facing a direction in which the electrode assembly 200 accommodated in the case 100 is located (i.e., the first surface 310a faces the electrode assembly 200).

The heat absorption unit 410 may be disposed in the case 100. The heat absorption unit 410 may be disposed between the cap plate 310 and the electrode assembly 200. The heat absorption unit 410 may be disposed to face the electrode assembly 200 along a direction parallel to the first direction.

The heat absorption unit 410 and the heat dissipation unit 420 may be disposed to be spaced apart from each other along a direction parallel to the first direction.

The heat absorption unit 410 may be in contact with the connection member 330 (see FIG. 3). The heat absorption unit 410 may absorb heat generated from the connection member 330. As the liquefied refrigerant accommodated in the heat absorption unit 410 is vaporized by absorbing the heat of the connection member 330, a rapid increase in temperature of the connection member 330 may be alleviated.

The heat of the electrode terminal 320 connected to the connection member 330 may be conducted to the heat absorption unit 410 through the connection member 330, thereby suppressing an increase in temperature of the electrode terminal 320. Accordingly, the safety of the secondary battery 1 may be secured.

A thickness of the heat absorption unit 410 parallel to the first direction may vary along a direction parallel to the second direction. In detail, the thickness of the heat absorption unit 410 parallel to the first direction may be formed to have different thicknesses along a direction parallel to the second direction.

A first portion 401a and a second portion 402a of the heat absorption unit 410 disposed to be spaced apart along a direction parallel to the second direction may be formed to have different thicknesses from a third portion 403a of the heat absorption unit 410 disposed between the first portion 401a and the second portion 402a of the heat absorption unit 410.

A thickness of the third portion 403a of the heat absorption unit 410 parallel to the first direction may be formed to be thinner than (either of) the thicknesses of the first portion 401a and the second portion 402a of the heat absorption unit 410 parallel to the first direction.

The thickness of the heat absorption unit 410 parallel to the first direction may become thinner (e. g. decrease, decreases continuously or linearly) from the first portion 401a of the heat absorption unit 410 to the third portion 403a of the heat absorption unit 410. Further, the thickness of the heat absorption unit 410 parallel to the first direction may become thinner (e. g. decrease, decreases continuously or linearly) from the second portion 402a of the heat absorption unit 410 to the third portion 403a of the heat absorption unit 410.

A first refrigerant induction surface 411 may be provided in the heat absorption unit 410. The first refrigerant induction surface 411 may be referred to as one surface of the heat absorption unit 410 facing a direction in which the electrode assembly 200 is located (i.e., the heat absorption unit 410 facing the electrode assembly 200). The first refrigerant induction surface 411 may be formed to be inclined (e.g., angled at an oblique angle with respect to the bottom of the cap plate) to induce the movement of the refrigerant to the first portion 401a and the second portion 402a of the heat absorption unit 410.

A pair of first refrigerant induction surfaces 411 may be symmetrically disposed. The pair of first refrigerant induction surfaces 411 may be formed to be inclined from the third portion 403a of the heat absorption unit 410 toward the first portion 401a and the second portion 402a of the heat absorption unit 410.

The heat dissipation unit 420 may be disposed to face the cap plate 310 along a direction parallel to the first direction. The heat dissipation unit 420 may be formed to have a substantially plate shape.

The heat dissipation unit 420 may be formed in a hollow shape provided with an inner space. The refrigerant may be accommodated in the heat dissipation unit 420. The refrigerant may move in the heat dissipation unit 420.

The heat dissipation unit 420 may be disposed to face a second surface 310b of the cap plate 310. The heat dissipation unit 420 may cover the second surface 310b of the cap plate 310. The heat dissipation unit 420 may contact the second surface 310b of the cap plate 310.

The second surface 310b of the cap plate 310 may be referred to as an outer side surface of the cap plate 310 facing the outside of the secondary battery 1.

The heat dissipation unit 420 may be disposed at the outer side of the cap plate 310. The heat dissipation unit 420 may be disposed to be spaced apart from the heat absorption unit 410 along a direction parallel to the first direction.

The heat dissipation unit 420 may be in contact with the electrode terminal 320. The heat dissipation unit 420 may receive heat from the electrode terminal 320 and may dissipate the heat from the electrode terminal 320 to the outside of the secondary battery 1.

The heat dissipation unit 420 may receive heat from the connection member 330 and dissipate the heat of the connection member 330 to the outside of the secondary battery 1.

The refrigerant vaporized in the heat absorption unit 410 and moving into the heat dissipation unit 420 may be liquefied in the heat dissipation unit 420 by losing heat to the surrounding environment of the heat dissipation unit 420 having a relatively lower temperature.

A thickness of the heat dissipation unit 420 parallel to the first direction may be formed to be thinner than a thickness of the electrode terminal 320 parallel to the first direction. The electrode terminal 320 may protrude from the heat dissipation unit 420 along a direction parallel to the first direction.

The thickness of the heat dissipation unit 420 parallel to the first direction may vary along a direction parallel to the second direction. In detail, the thickness of the heat dissipation unit 420 parallel to the first direction may be formed to have different thicknesses along a direction parallel to the second direction.

A first portion 401b and a second portion 402b of the heat dissipation unit 420 disposed to be spaced apart from each other along a direction parallel to the second direction may be formed to have different thicknesses from a third portion 403b of the heat dissipation unit 420 disposed between the first portion 401b and the second portion 402b of the heat dissipation unit 420.

The thickness of the third portion 403b of the heat dissipation unit 420 parallel to the first direction may be formed with a thickness thinner than the thicknesses of the first portion 401b and the second portion 402b of the heat dissipation unit 420 parallel to the first direction.

The thickness of the heat dissipation unit 420 parallel to the first direction may become thinner (e. g. decrease, decreases continuously or linearly) from the first portion 401b of the heat dissipation unit 420 to the third portion 403b of the heat dissipation unit 420. Further, the thickness of the heat dissipation unit 420 parallel to the first direction may become thinner (e. g. decrease, decreases continuously or linearly) from the second portion 402b of the heat dissipation unit 420 to the third portion 403b of the heat dissipation unit 420.

A second refrigerant induction surface 421 may be provided in the heat dissipation unit 420. The second refrigerant induction surface 421 may be referred to as one surface of the heat dissipation unit 420 facing a direction opposite the direction in which the cap plate 310 is located. In detail, the one surface of the heat dissipation unit 420 including the second refrigerant induction surface 421 may be disposed to face the first direction.

The second refrigerant induction surface 421 may be formed to be inclined to induce the movement of the refrigerant to the third portion 403b of the heat dissipation unit 420.

A pair of second refrigerant induction surfaces 421 may be symmetrically disposed. The pair of second refrigerant induction surfaces 421 may be formed to be inclined from the first portion 401b and the second portion 402b of the heat dissipation unit 420 toward the third portion 403b of the heat dissipation unit 420.

A through hole portion 422 may be provided in the heat dissipation unit 420. The through hole portion 422 may be formed through the heat dissipation unit 420 in a direction parallel to the first direction. A plurality of through hole portions 422 may be provided.

The heat dissipation unit 420 may be formed with a porous structure. The through hole portion 422 may increase a surface area of the heat dissipation unit 420 so that the heat of the heat dissipation unit 420 may be quickly dissipated.

The plurality of through hole portions 422 may be formed to have different sizes. A cross-sectional shape of the through hole portion 422 may be designed to have various shapes such as an oval shape, a polygonal shape, and the like.

The plurality of through hole portions 422 may be formed to have different diameters. The diameters of the plurality of through hole portions 422 may become smaller from the first portion 401b of the heat dissipation unit 420 to the third portion 403b of the heat dissipation unit 420.

Further, the diameters of the plurality of through hole portions 422 may become smaller from the second portion 402b of the heat dissipation unit 420 to the third portion 403b of the heat dissipation unit 420.

The refrigerant liquefied in the heat dissipation unit 420 may smoothly move to the third portion 403b of the heat dissipation unit 420.

The refrigerant moving portion 430 may be disposed between the heat absorption unit 410 and the heat dissipation unit 420 to connect the heat absorption unit 410 and the heat dissipation unit 420. The refrigerant moving portion 430 may be formed in a hollow shape with an empty interior.

The refrigerant moving portion 430 may function as a path through which the refrigerant moves. The inside of the heat absorption unit 410 and the inside of the heat dissipation unit 420 may communicate with each other by the refrigerant moving portion 430.

The refrigerant moving portion 430 may extend along the first direction. The refrigerant moving portion 430 may pass through the cap plate 310 in a direction parallel to the first direction.

The refrigerant moving portion 430 may include a first refrigerant moving portion 431, a second refrigerant moving portion 432, and a third refrigerant moving portion 433.

The first refrigerant moving portion 431 may be disposed in the first portion 401 of the cooling unit 400. The first refrigerant moving portion 431 may connect the first portion 401a of the heat absorption unit 410 and the first portion 401b of the heat dissipation unit 420.

The second refrigerant moving portion 432 may be disposed to be spaced apart from the first refrigerant moving portion 431 along a direction parallel to the second direction. The second refrigerant moving portion 432 may be disposed to be spaced apart from the first refrigerant moving portion 431 along the second direction.

The second refrigerant moving portion 432 may be disposed in the second portion 402 of the cooling unit 400. The second refrigerant moving portion 432 may connect the second portion 402a of the heat absorption unit 410 and the second portion 402b of the heat dissipation unit 420. The first refrigerant moving portion 431 and the second refrigerant moving portion 432 may be adjacent to the electrode terminals 320.

The third refrigerant moving portion 433 may be disposed between the first refrigerant moving portion 431 and the second refrigerant moving portion 432. The third refrigerant moving portion 433 may be disposed in the third portion 403 of the cooling unit 400. The third refrigerant moving portion 433 may connect the third portion 403a of the heat absorption unit 410 and the third portion 403b of the heat dissipation unit 420. The third refrigerant moving portion 433 may be adjacent to the vent 340.

A plurality of third refrigerant moving portions 433 may be provided. The plurality of third refrigerant moving portions 433 may be disposed to be spaced apart from each other along a direction parallel to the third direction (see FIG. 7). The vent 340 may be disposed between the plurality of third refrigerant moving portions 433.

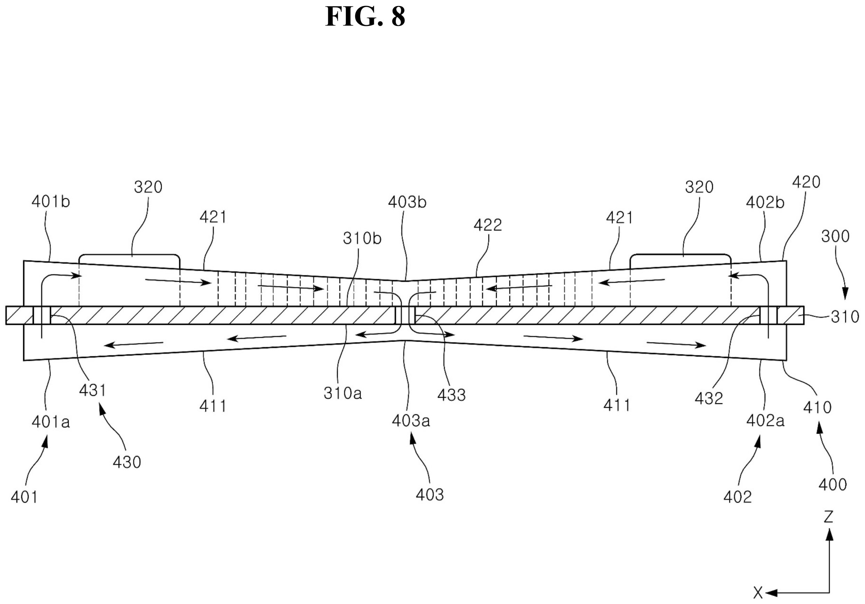

FIG. 8 is a cross-sectional view schematically illustrating a movement path of the refrigerant in the cooling unit according to an embodiment of the present disclosure.

Referring to FIGS. 1 to 8, the liquefied refrigerant induced to the first portion 401a and the second portion 402a of the heat absorption unit 410 by the first refrigerant induction surface 411 of the heat absorption unit 410 and moving to the first portion 401a and the second portion 402a of the heat absorption unit 410 may be vaporized by absorbing the heat of the connection member 330, the heat of the electrode terminal 320 conducted through the connection member 330, and the surrounding heat of the heat absorption unit 410.

The vaporized refrigerant may move into the heat dissipation unit 420 having a relatively lower temperature than the heat absorption unit 410 through the first refrigerant moving portion 431 and the second refrigerant moving portion 432. Arrows shown in FIG. 8 indicate movement directions of the refrigerant.

The refrigerant vaporized in the heat absorption unit 410 and moving into the heat dissipation unit 420 may be liquefied in the heat dissipation unit 420 by losing heat to the surrounding environment of the heat dissipation unit 420 having a relatively lower temperature.

The refrigerant ascending in the heat dissipation unit 420 in a vaporized state may be liquefied and may be formed into droplets on the second refrigerant induction surface 421 of the heat dissipation unit 420. The liquefied refrigerant may be induced to the third portion 403b of the heat dissipation unit 420 by the second refrigerant induction surface 421 and may move to the third portion 403b of the heat dissipation unit 420.

The liquefied refrigerant moving to the third portion 403b of the heat dissipation unit 420 may move into the heat absorption unit 410 through the third refrigerant moving portion 433. The liquefied refrigerant may fall toward the heat absorption unit 410 in a direction of gravity.

The present disclosure is directed to providing a secondary battery capable of suppressing an increase in temperature of an electrode terminal, and a battery pack including the same.

The present disclosure is also directed to providing a secondary battery capable of alleviating a rapid increase in temperature of a connection member connected to an electrode terminal and an electrode assembly, and a battery pack including the same.

According to one or more embodiments of the present disclosure, the stability of a secondary battery can be secured by suppressing an increase in temperature of the secondary battery by a configuration of a heat absorption unit disposed between a cap plate and an electrode assembly to absorb surrounding heat, and a configuration of a heat dissipation unit which is disposed at an outer side the cap plate, receives the heat from the heat absorption unit, and dissipates the heat.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (1), comprising:
a case (100);
an electrode assembly (200) accommodated in the case (100);
a cap assembly (300) facing the electrode assembly (200); and
a cooling unit (400) in the cap assembly (300), the cooling unit (400) including a refrigerant.

2. The secondary battery (1) as claimed in claim 1, wherein the cap assembly (300) includes:
a cap plate (310) coupled to the case (100), the cap plate (310) facing the electrode assembly (200) along a direction parallel to a first direction;
an electrode terminal (320) coupled to the cap plate (310), the electrode terminal (320) being in contact with the cooling unit (400); and
a connection member (330) connected to the electrode terminal (320) and the electrode assembly (200).

3. The secondary battery (1) as claimed in claim 2, wherein the cooling unit (400) further includes:
a first portion (401);
a second portion (402) spaced apart from the first portion (401) along a direction parallel to a second direction intersecting the first direction; and
a third portion (403) between the first portion (401) and the second portion (402), the third portion (403) being thinner than either of the first portion (401) and the second portion (402).

4. The secondary battery (1) as claimed in claim 3, wherein a thickness of the cooling unit (400) parallel to the first direction becomes thinner from the first portion (401) to the third portion (403) and from the second portion (402) to the third portion (403).

5. The secondary battery (1) as claimed in claim 3 or 4, wherein the cooling unit (400) further includes:
a heat absorption unit (410) facing a first surface (310a) of the cap plate (310), the heat absorption unit (410) contacting the connection member (330); and
a heat dissipation unit (420) facing a second surface (310b) of the cap plate (310), the heat dissipation unit (420) facing a direction opposite the first surface (310a).

6. The secondary battery (1) as claimed in claim 5, wherein the heat absorption unit (410) and the heat dissipation unit (420) are spaced apart along a direction parallel to the first direction.

7. The secondary battery (1) as claimed in claim 5 or 6, wherein the heat absorption unit (410) is between the cap plate (310) and the electrode assembly (200).

8. The secondary battery (1) as claimed in any one of claims 5 to 7, wherein a thickness of the heat absorption unit (410) parallel to the first direction varies along a direction parallel to the second direction.

9. The secondary battery (1) as claimed in any one of claims 5 to 8, wherein a thickness of the heat dissipation unit (420) parallel to the first direction varies along a direction parallel to the second direction.

10. The secondary battery (1) as claimed in any one of claims 5 to 9, wherein the heat dissipation unit (420) includes a plurality of through hole portions (422).

11. The secondary battery (1) as claimed in any one of claims 5 to 10, wherein the cooling unit (400) further includes a refrigerant moving portion (430) connecting the heat absorption unit (410) and the heat dissipation unit (420) to allow movement of the refrigerant.

12. The secondary battery (1) as claimed in claim 11, wherein the refrigerant moving portion (430) includes:
a first refrigerant moving portion (431);
a second refrigerant moving portion (432) spaced apart from the first refrigerant moving portion (431) along a direction parallel to the second direction; and
a third refrigerant moving portion (433) between the first refrigerant moving portion (431) and the second refrigerant moving portion (432).

13. The secondary battery (1) as claimed in claim 12, wherein the refrigerant moving portion (430) is configured such that:
when the refrigerant is vaporized in the heat absorption unit (410) the refrigerant is caused to move to the heat dissipation unit (420) through the first refrigerant moving portion (431) and the second refrigerant moving portion (432); and
when the refrigerant is liquefied in the heat dissipation unit (420) the refrigerant is caused to move to the heat absorption unit (410) through the third refrigerant moving portion (433).

14. The secondary battery (1) as claimed in any one of claims 2 to 13, wherein the electrode terminal (320) protrudes from the cap plate (310) along the first direction.

15. A battery pack, comprising:
a housing (10); and
one or more secondary batteries in the housing (10),
wherein each of the one or more secondary batteries includes:
a case (100),
an electrode assembly (200) accommodated in the case (100),
a cap assembly (300) facing the electrode assembly (200), and
a cooling unit (400) in the cap assembly (300), the cooling unit (400) accommodating a refrigerant.
